(19) Europäisches Patentamt
European Patent Office
Office européen des brevets

(11) EP 4 365 226 A1

(12) # EUROPEAN PATENT APPLICATION
published in accordance with Art. 153(4) EPC

(43) Date of publication:
**08.05.2024 Bulletin 2024/19**

(21) Application number: **23844057.2**

(22) Date of filing: **07.07.2023**

(51) International Patent Classification (IPC):
***C08K 5/5313*** *(2006.01)* ***C08K 5/521*** *(2006.01)*
***C08K 5/3492*** *(2006.01)* ***C08K 3/36*** *(2006.01)*
***C08L 67/02*** *(2006.01)*

(86) International application number:
**PCT/KR2023/009651**

(87) International publication number:
**WO 2024/058384 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 KR 20220117051**
**06.07.2023 KR 20230087762**

(71) Applicant: **LG Chem, Ltd.**
**Yeoui-daero, Youngdungpo-gu**
**Seoul 07336 (KR)**

(72) Inventors:
- **LEE, Ji Heun**
  **Daejeon 34122 (KR)**
- **PARK, Won Seok**
  **Daejeon 34122 (KR)**
- **KWON, Tae Hun**
  **Daejeon 34122 (KR)**
- **PARK, Jae Chan**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYBUTYLENE TEREPHTHALATE RESIN COMPOSITION, METHOD FOR MANUFACTURING SAME, AND MOLDED PRODUCT MANUFACTURED THEREFROM**

(57) Disclosed are a polybutylene terephthalate resin composition, a method of preparing the same and a molded article including the same. The polybutylene terephthalate resin composition can provide an excellent physical property balance between mechanical strength and flame retardancy at a level equivalent to or higher than that of a polyester resin composite material containing a halogen-based flame retardant, has excellent processability due to excellent flowability, and is specifically suitable as a material for automotive electronic components.

EP 4 365 226 A1

**Description**

[Technical Field]

[Cross-Reference to Related Applications]

This application claims priority to Korean Patent Application No. 10-2022-0117051, filed on September 16, 2022, and Korean Patent Application No. 10-2023-0087762, refiled on July 06, 2023, based on Korean Patent Application No. 10-2022-0117051, in the Korean Intellectual Property Office, the disclosure of which is incorporated herein by reference.

The present invention relates to a polybutylene terephthalate resin composition, a method of preparing the same, and a molded article including the same, and more particularly to a polybutylene terephthalate resin composition exhibiting an excellent physical property balance between mechanical properties and flame retardancy even without a halogen-based flame retardant, a method of preparing the polybutylene terephthalate resin composition and a molded article including the polybutylene terephthalate resin composition.

[Background Art]

To realize weight reduction and reduce manufacturing costs, research is actively being conducted to replace automobile component materials with plastic in the automobile field.

Among plastics, polyester resin is widely used as a material for automobile components and is evaluated as having the potential to replace aluminum or steel. Among polyester resins as materials for automobile components, research into the application of a polybutylene terephthalate resin to various automobile components is being actively conducted due to the excellent high rigidity and heat resistance of the polybutylene terephthalate resin.

However, to apply a polybutylene terephthalate resin as a material for electronic components, especially connector parts, it is necessary to develop a flame retardant composite material containing a non-halogenated flame retardant.

A metal salt phosphorus-based flame retardant is mainly used as a non-halogenated flame retardant for a polybutylene terephthalate resin composite material, but, when compared to when using a halogen-based flame retardant, it is difficult to realize the same degree of mechanical rigidity and flame retardancy. Accordingly, there is an urgent need for the development of a polybutylene terephthalate resin composition having excellent mechanical rigidity and flame retardancy while including a non-halogenated flame retardant.

[Related Art Document]

[Patent Document]

KR 2011-0072828 A

[Disclosure]

[Technical Problem]

Therefore, the present invention has been made in view of the above problems, and it is one object of the present invention to provide a polybutylene terephthalate resin composition capable of realizing a physical property balance between mechanical strength and flame retardancy suitable for an automobile component material, and a method of preparing the polybutylene terephthalate resin composition.

It is another object of the present invention to provide a molded article manufactured using the polybutylene terephthalate resin composition.

The above and other objects can be accomplished by the present invention described below.

[Technical Solution]

In accordance with an aspect of the present invention, the above and other objects can be accomplished by the provision of a polybutylene terephthalate resin composition, including: polybutylene terephthalate; an aluminum salt of diethyl phosphinic acid; melamine polyphosphate; and a silica-containing reinforcing agent, wherein the polybutylene terephthalate resin composition satisfies Equation 1 below:

[Equation 1]

$$7.76 \leq a/b \leq 45$$

where a represents a tensile strength (MPa) of the polybutylene terephthalate resin composition measured according to ISO 527, and b represents a flow index (g/10 min) of the polybutylene terephthalate resin composition measured at 265 °C under a load of 2.16 kg according to ISO 1133.

II) In I), the silica-containing reinforcing agent may include 50 % by weight or more, specifically 50 to 70 % by weight, preferably 50 to 65 % by weight, more preferably 50 to 60 % by weight, of silica.

III) In I) or II), when a content of the polybutylene terephthalate is c and a content of the silica-containing reinforcing agent is d, correlation $0.5d \leq c \leq 2d$ may be satisfied.

Here, the content may mean % by weight based on 100 % by weight of a total of polybutylene terephthalate, an aluminum salt of diethyl phosphinic acid, melamine polyphosphate, and a silica-containing reinforcing agent, or, as needed, may mean % by weight based on 100 % by weight of a total of one or more selected from among melamine cyanurate, polyethylene, a processability improver and a heat-resistant additive as well as polybutylene terephthalate, an aluminum salt of diethyl phosphinic acid, melamine polyphosphate, and a silica-containing reinforcing agent.

IV) In I) to III), the polybutylene terephthalate may be included in an amount of 15 to 65 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the polybutylene terephthalate may be included in an amount of 15 to 65 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

V) In I) to IV), the polybutylene terephthalate may have an intrinsic viscosity ($\eta$) of 0.5 to 1.25 dl/g measured according to ASTM D2857.

VI) In I) to V), the silica-containing reinforcing agent may be included in an amount of 10 to 50 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the silica-containing reinforcing agent may be included in an amount of 10 to 50 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

VII) In I) to VI), the aluminum salt of diethyl phosphinic acid may be included in an amount of 5 to 35 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the aluminum salt of diethyl phosphinic acid may be included in an amount of 5 to 35 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

VIII) In I) to VII), the melamine polyphosphate may be included in an amount of 0.1 to 10 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the melamine polyphosphate may be included in an amount of 0.1 to 10 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

IX) In I) to VIII), the resin composition may include melamine cyanurate in an amount of 0.1 to 10 % by weight based on 100 % by weight of a total of polybutylene terephthalate, an aluminum salt of diethyl phosphinic acid, melamine polyphosphate, a silica-containing reinforcing agent and melamine cyanurate; or the polybutylene terephthalate resin composition may include a processability improver and a heat-resistant additive, and the processability improver and the heat-resistant additive may be included in an amount of 0.1 to 10 % by weight based on 100 % by weight of a total of polybutylene terephthalate, an aluminum salt of diethyl phosphinic acid, melamine polyphosphate, a silica-containing reinforcing agent, melamine cyanurate, a processability improver and a heat-resistant additive.

X) In I) to IX), the resin composition may include a processability improver in an amount of 0.001 to 3 % by weight based on 100 % by weight of a total of polybutylene terephthalate, an aluminum salt of diethyl phosphinic acid, melamine polyphosphate, a silica-containing reinforcing agent and a processability improver.

XI) In I) to X), the resin composition may include a heat-resistant additive in an amount of 0.001 to 3 % by

weight based on 100 % by weight of a total of polybutylene terephthalate, an aluminum salt of diethyl phosphinic acid, melamine polyphosphate, a silica-containing reinforcing agent and a heat-resistant additive.

In accordance with another aspect of the present invention, there is provided a method of preparing a polybutylene terephthalate resin composition, the method including: kneading and extruding polybutylene terephthalate; an aluminum salt of diethyl phosphinic acid; melamine polyphosphate; and a silica-containing reinforcing agent, wherein the polybutylene terephthalate resin composition satisfies Equation 1 below:

[Equation 1]

$$7.76 \leq a/b \leq 45$$

where a represents a tensile strength (MPa) of the polybutylene terephthalate resin composition measured according to ISO 527, and b represents a flow index (g/10 min) of the polybutylene terephthalate resin composition measured at 265 °C under a load of 2.16 kg according to ISO 1133.

XIII) In accordance with yet another aspect of the present invention, there is provided a molded article including the above-described polybutylene terephthalate resin composition.

XIV) In XIII), the molded article may be an automotive electronic component.

[Advantageous Effects]

As apparent from the above description, a polybutylene terephthalate resin composition according to the present invention can provide an excellent physical property balance between mechanical strength and flame retardancy at a level equivalent to or higher than that of a polyester resin composite material containing a halogen-based flame retardant, has excellent processability due to excellent flowability, and can be provided as a material for automotive electronic components.

That is, a molded article made of the polybutylene terephthalate resin composition according to the present invention can exhibit a high level of physical property balance between mechanical properties such as tensile strength and flame retardancy.

Therefore, the polybutylene terephthalate resin composition according to the present invention and a molded article including the same can be widely used in the field of automobile components requiring the same.

[Best Mode]

Hereinafter, the present invention will be described in more detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

The present inventors confirmed that a balance of physical properties of mechanical strength and flame retardancy at a level suitable for an automobile component material can be realized by adjusting the type and content of a non-halogenated flame retardant, thus completing the present invention.

The polybutylene terephthalate resin composition according to the present invention includes polybutylene terephthalate, an aluminum salt of diethyl phosphinic acid, melamine polyphosphate, and a silica-containing reinforcing agent.

When a is a tensile strength (MPa) measured by ISO 527 and b is a flow index (g/10 min) measured according to ISO 1133 under a load of 2.16 kg at 265°C, a/b of the polybutylene terephthalate resin composition may satisfy, for example, 7.76 to 45, specifically 7.76 to 40, preferably 7.77 to 40. When the ranges are satisfied, the property balance among rigidity, flame retardancy and processability can be provided.

In an embodiment of the present invention, a may be 130 or more, or 130 to 165, and b may be 4 to 20, or 4 to 18.

Hereinafter, each component of the polybutylene terephthalate resin composition of the present invention is described in detail.

**Polybutylene terephthalate**

In one embodiment of the present invention, as the polybutylene terephthalate, polybutylene terephthalate obtained by polycondensation through direct esterification or transesterification of 1,4-butanediol and terephthalic acid

or dimethyl terephthalate may be used.

In one embodiment of the present invention, to increase the impact strength of the polybutylene terephthalate resin composition, a copolymer obtained by copolymerizing the polybutylene terephthalate and an impact strength enhancing compound such as polytetramethylene glycol, polyethylene glycol, polypropylene glycol, aliphatic polyester, and aliphatic polyamide or a modified polybutylene terephthalate obtained by mixing the polybutylene terephthalate and the impact strength enhancing compound may be used.

In an embodiment of the present invention, the intrinsic viscosity ($\eta$) of the polybutylene terephthalate measured according to ASTM D2857 may be, for example, 0.5 to 1.25 dl/g, preferably 0.5 to 1.25 dl/g, more preferably 0.52 to 1 dl/g. When the intrinsic viscosity of the polybutylene terephthalate is within the ranges, a polybutylene terephthalate resin composition in which a property balance between mechanical property and moldability is excellent may be obtained.

In an embodiment of the present invention, the polybutylene terephthalate may be included in an amount of 15 to 65 % by weight, 25 to 58 % by weight, preferably 40 to 58 % by weight, more preferably 40 to 55 % by weight, even more preferably 45 to 55 % by weight, based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive and the polybutylene terephthalate may be included in an amount of 15 to 65 % by weight, 25 to 58 % by weight, preferably 40 to 58 % by weight, more preferably 40 to 55 % by weight, even more preferably 45 to 55 % by weight, based on 100 % by weight of a total of polybutylene terephthalate, an aluminum salt of diethyl phosphinic acid, melamine polyphosphate, a silica-containing reinforcing agent, a processability improver and a heat-resistant additive. When the polybutylene terephthalate is included within the ranges, a polybutylene terephthalate resin composition having an excellent property balance among processability, specific gravity and mechanical property may be provided.

### Reinforcing agent

In an embodiment of the present invention, the reinforcing agent may be, for example, glass fiber, and the reinforcing agent may be used in combination with other inorganic fibers.

Here, the inorganic fiber may include one or more selected from carbon fiber, basalt fiber, and natural fiber such as kenaf or hemp.

In an embodiment of the present invention, the cross-section of the reinforcing agent may have a shape such as a circle, a rectangle, an oval, a dumbbell, or a rhombus. The reinforcing agent may have an average diameter of 8 to 20 $\mu$m, or 10 to 15 $\mu$m and an average length of 2 to 6 mm, or 2 to 4 mm.

Here, the average diameter and average length of the reinforcing agent may be measured by methods commonly used in the art. For example, the reinforcing agent may be observed with a scanning electron microscope (SEM), and an average diameter and average length of 10 to 30 strands of the reinforcing agent may be respectively measured.

During a fiber production or post-treatment process, the reinforcing agent may be treated with a sizing agent, and the sizing agent may include a processing improver, a coupling agent, and a surfactant.

The processing improver is mainly used to form good strands, and the coupling agent improves adhesion between the reinforcing agent and the polybutylene terephthalate resin. When the coupling agent is appropriately selected and used in consideration of the types of the polybutylene terephthalate resin and the reinforcing agent, excellent physical properties may be imparted to the polybutylene terephthalate resin composition.

Methods of using the coupling agent may include a method of directly treating with a reinforcing agent, a method of adding to an organic matrix, and the like, and to sufficiently exhibit the performance of the coupling agent, the content thereof should be appropriately selected.

Examples of the coupling agent include amine-based coupling agents, acrylic coupling agents, and silane-based coupling agents such as $\gamma$-aminopropyltriethoxysilane, $\gamma$-aminopropyltrimethoxysilane, N-(beta-aminoethyl) $\gamma$-aminopropyltriethoxysilane, $\gamma$-methacryloxypropyl triethoxysilane, $\gamma$-glycidoxypropyl trimethoxysilane, and $\beta$ (3,4-epoxyethyl) $\gamma$-aminopropyl trimethoxysilane.

In particular, the reinforcing agent of the present disclosure contains preferably silica. In this case, rigidity and mechanical property can be provided.

In the reinforcing agent, the silica may be included in an amount of, for example, 50 % by weight or more, specifically 50 to 70 % by weight, preferably 50 to 65 % by weight, more preferably 50 to 60 % by weight. When these ranges are satisfied, an excellent balance between rigidity and mechanical property may be provided.

Specifically, as shown in the following examples and comparative examples, it can be confirmed that, when silica is added in a non-appropriate content, for example when 48% by weight of a reinforcing agent is added as an alternative, flame retardancy is excellent, but a balance between physical properties is not provided due to poor tensile strength and flow index (see Comparative Example 4).

In the present invention, the content of silica in the reinforcing agent may be measured or confirmed using X-Ray Fluorescence spectrometry (XRF).

In an embodiment of the present invention, the silica-containing reinforcing agent may be included in an amount of 10 to 50 % by weight, preferably 15 to 50 % by weight, more preferably 20 to 50 % by weight, based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the silica-containing reinforcing agent may be included in an amount of 10 to 50 % by weight, preferably 15 to 50 % by weight, more preferably 20 to 50 % by weight, based on 100 % by weight of a total of polybutylene terephthalate, an aluminum salt of diethyl phosphinic acid, melamine polyphosphate, a silica-containing reinforcing agent, a processability improver and a heat-resistant additive.

**Non-halogenated flame retardant**

The non-halogenated flame retardant according to the present invention may include an aluminum salt of diethyl phosphinic acid and melamine polyphosphate, may provide flame retardant effect during extrusion and injection molding of the polybutylene terephthalate resin composition, and may sufficiently provide a flame retardant effect even when the polybutylene terephthalate resin composition is stored for a long time.

The aluminum salt of diethyl phosphinic acid can improve the flame retardancy of a composition by forming a char on the surface of a polymer.

In an embodiment of the present invention, the aluminum salt of diethyl phosphinic acid may be a commercially available product.

The aluminum salt of diethyl phosphinic acid may be included, for example, in an amount of 5 to 35 % by weight, 10 to 30 % by weight, specifically 10 to 25 % by weight, preferably 10 to 20 % by weight, based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the aluminum salt of diethyl phosphinic acid may be included in an amount of 5 to 35 % by weight, 10 to 30 % by weight, specifically 10 to 25 % by weight, preferably 10 to 20 % by weight based on 100 % by weight of a total of polybutylene terephthalate, an aluminum salt of diethyl phosphinic acid, melamine polyphosphate, a silica-containing reinforcing agent, a processability improver and a heat-resistant additive. When these ranges are satisfied, The flame retardancy of the composition may be improved by forming a char on a polymer surface.

When the melamine polyphosphate is used together with the aluminum salt of diethyl phosphinic acid described above, the melamine polyphosphate and the aluminum salt of diethyl phosphinic acid form a char on a polymer surface together, thereby enhancing a protection effect against combustion.

In an embodiment of the present invention, a commercially available product may be used as the melamine polyphosphate.

The melamine polyphosphate may be included in an amount of, for example, 0.1 to 10 % by weight, specifically 0.1 to 5 % by weight, preferably 1 to 5 % by weight, more preferably 2 to 4 % by weight, based on 100 % by weight of a total of polybutylene terephthalate, an aluminum salt of diethyl phosphinic acid, melamine polyphosphate, and a silica-containing reinforcing agent; or the polybutylene terephthalate resin composition may include a processability improver and a heat-resistant additive, and the melamine polyphosphate may be included in an amount of, for example, 0.1 to 10 % by weight, specifically 0.1 to 5 % by weight, preferably 1 to 5 % by weight, more preferably 2 to 4 % by weight, based on 100 % by weight of a total of polybutylene terephthalate, an aluminum salt of diethyl phosphinic acid, melamine polyphosphate, a silica-containing reinforcing agent, a processability improver and a heat-resistant additive. When these ranges are satisfied, a char may be sufficiently formed on a polymer surface, thereby improving the flame retardancy of the composition.

According to an embodiment of the present invention, melamine cyanurate may be included. In this case, an inert gas may be generated, thereby improving flame retardancy.

The melamine cyanurate may be included in an amount of, for example, 0.1 to 10 % by weight, specifically 0.1 to 4.5 % by weight, preferably 0.1 to 3.5 % by weight, more preferably 1 to 3.5 % by weight, based on 100 % by weight of a total of polybutylene terephthalate, an aluminum salt of diethyl phosphinic acid, melamine polyphosphate, a silica-containing reinforcing agent and melamine cyanurate; or the polybutylene terephthalate resin composition may include a processability improver and a heat-resistant additive and may be included in an amount of, for example, 0.1 to 10 % by weight, specifically 0.1 to 4.5 % by weight, preferably 0.1 to 3.5 % by weight, more preferably 1 to 3.5 % by weight, based on 100 % by weight of a total of polybutylene terephthalate, an aluminum salt of diethyl phosphinic acid, melamine polyphosphate, a silica-containing reinforcing agent, melamine cyanurate, a processability improver and a heat-resistant additive.

**Processability improver**

The processability improver according to the present invention may be olefin wax, and serves to help the

polybutylene terephthalate resin composition maintain excellent releasability and injection properties.

The olefin wax may be a polymer having a low melt viscosity and may be an oily solid having sliding properties and plasticity. For example, the olefin wax may include at least one selected from polyethylene wax and polypropylene wax, and commercially available olefin wax may be used.

For example, polyethylene may be used as the processability improver. Specifically, polyethylene having a drop point of 100 to 120 °C, a melting point (mp) of 95 to 115 °C, a density (23 °C) of 0.9 to 1.0 g/cm3, and an absolute viscosity (120 °C) of 350 to 450 $mm^2/s$ may be used. In this case, releasability and injection moldability may be effectively provided.

In the present disclosure, a dropping point indicates the temperature at which a lubricant transitions from a semi-solid to a liquid according to ASTM D566, KS M 2033. More specifically, a sample is placed in a specified cup having a diameter of 100 mm and the sample is heated according to the specified conditions. Then, a temperature at which grease drops is measured. In this case, the temperature represents a dropping point.

In the present disclosure, melting point may be measured using a differential scanning calorimeter 2920 (DSC 2920, TA Co.). As a specific example of measuring melting point, after a DSC is equilibrated at a temperature of 0 °C, the temperature is increased to 180 °C at a rate of 20 °C/min, the temperature is reduced to -60 °C at a rate of 20 °C/min, and then the temperature is increased to 180 °C at a rate of 10 °C/min. At this time, in the second temperature increase section, a melting point is obtained from the top region of an endothermic curve.

In the present disclosure, a density may be measured, for example, according to the measurement method of ASTM D1505.

In the present disclosure, an absolute viscosity may be measured using an absolute viscometer manufactured by Brookfield. As a specific measurement example, an absolute viscosity may be measured according to ASTM D1986-14 method using the absolute viscometer LVT 230 manufactured by Brookfield.

Specifically, polyethylene having a drop point of 105 to 115 °C, a melting point (mp) of 100 to 110 °C, a density (23 °C) of 0.95 to 1.0 g/cm3, and an absolute viscosity (120 °C) of 380 to 420 $mm^2/s$ may be used as the processability improver.

Specifically, polyethylene wax having a drop point of 108 to 112 °C, a melting point (mp) of 102 to 106 °C, a density (23 °C) of 0.95 to 0.98 g/cm3, and an absolute viscosity (120 °C) of 400 to 420 $mm^2/s$ may be used as the processability improver.

In an embodiment of the present invention, a commercially available product may be used as the processability improver. For example, products such as LC102N may be used.

In an embodiment of the present invention, the processability improver may be included in an amount of, for example, 0.001 to 3 % by weight, preferably 0.05 to 3 % by weight, more preferably 0.01 to 3 % by weight, most preferably 0.01 to 1 % by weight, based on 100 % by weight of a total of polybutylene terephthalate, an aluminum salt of diethyl phosphinic acid, melamine polyphosphate, a silica-containing reinforcing agent and a processability improver; or the polybutylene terephthalate resin composition may include melamine cyanurate and may be included in an amount of, for example, 0.001 to 3 % by weight, preferably 0.05 to 3 % by weight, more preferably 0.01 to 3 % by weight, most preferably 0.01 to 1 % by weight, based on 100 % by weight of a total of a processability improver, polybutylene terephthalate, an aluminum salt of diethyl phosphinic acid, melamine polyphosphate, polyethylene, a silica-containing reinforcing agent and melamine cyanurate. When the ranges are satisfied, excellent releasability and injection moldability may be sufficiently provided.

Specifically, the resin composition may include polyethylene. This polyethylene may be included in an amount of, for example, 0.001 to 3 % by weight, preferably 0.05 to 3 % by weight, more preferably 0.01 to 3 % by weight, most preferably 0.01 to 1 % by weight, based on 100 % by weight of a total of polybutylene terephthalate, an aluminum salt of diethyl phosphinic acid, melamine polyphosphate, a silica-containing reinforcing agent and polyethylene; or the polybutylene terephthalate resin composition may include polyethylene, melamine cyanurate and a heat-resistant additive and may be included in an amount of, for example, 0.001 to 3 % by weight, preferably 0.05 to 3 % by weight, more preferably 0.01 to 3 % by weight, most preferably 0.01 to 1 % by weight, based on 100 % by weight of a total of polybutylene terephthalate, an aluminum salt of diethyl phosphinic acid, melamine polyphosphate, polyethylene, a silica-containing reinforcing agent, polyethylene, melamine cyanurate and a heat-resistant additive.

**Heat-resistant additive**

The heat-resistant additive according to the present invention may provide an antioxidant effect at high temperature during extrusion and injection molding of the polybutylene terephthalate resin composition.

The heat-resistant additive may be, for example, one or more selected from a hindered phenolic compound, a phosphite compound and a phosphonite compound.

As the hindered phenolic compound, a commercially available product may be used.

Examples of the hindered phenolic compound include octadeeyl-3-(4-hydroxy-3,5-ditert-butylphenyl) propionate, tetrabis[methylene-3-(3,5-di-tert-butyl-4-hydroxyphenyl) propionate]methane, 1,3,5-tri-methyl-2,4,6-tris(3,5-di-tert-butyl-4-hydroxybenzyl)benzene, pentaerythritol tetrakis(3-(3,5-di-tert-butyl-4-hydroxyphenyl)propionate and the like, and it is preferred to use pentaerythritol tetrakis (3-(3,5-di-tert-butyl-4- hydroxyphenyl)propionate.

Examples of the phosphite compound include triphenyl phosphite, tris(monyl phenyl) phosphite, triisodecyl phosphite, diphenyl-isooctyl-phosphite, bis(2,6-di-tert-butyl-4-methylphenyl)pentaerythritol diphosphite, tris(2,4-di-tert-butylphenyl) phosphite and the like, and it is preferred to use tris(2,4-di-tert-butylphenyl) phosphite.

As the phosphonite compound, a compound represented by Formula 1 below may be used:

[Formula 1]

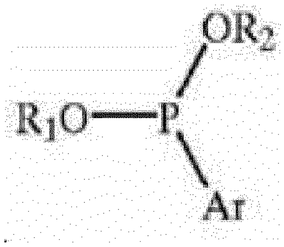

where $R_1$ and $R_2$ are each independently alkyl, aryl, alkylaryl, specifically $C_1$-$C_{30}$ alkyl, $C_6$-$C_{30}$ aryl or alkylaryl, and Ar is an aryl group such as phenyl, naphthyl, biphenyl or terphenyl.

As another example, the heat-resistant additive may be a mixture of a compound represented by Formula 2 below and a compound represented by Formula 3 below.

When the compound represented by Formula 2 below is mixed with the compound represented by Formula 3 below, a density of, for example, 530 g/l or more, specifically 530~630 g/l, is preferred to provide an antioxidant effect at high temperature.

Here, the density may be a value measured using a method and equipment commonly used in this technical field.

In an embodiment of the present invention, a commercially available product may be used. For example, a product such as B-225 may be used.

[Formula 2]

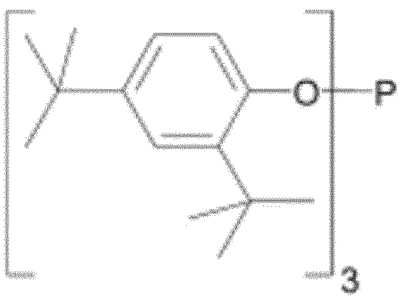

[Formula 3]

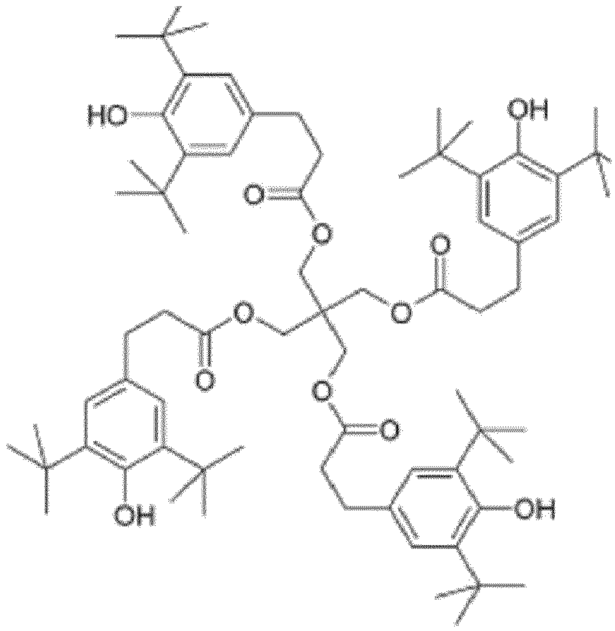

In an embodiment of the present invention, the heat-resistant additive may be included in an amount of, for example, 0.001 to 3 % by weight, preferably 0.05 to 2 % by weight, more preferably 0.01 to 2 % by weight, even more preferably 0.1 to 2 % by weight, based on 100 % by weight of a total of polybutylene terephthalate, an aluminum salt of diethyl phosphinic acid, melamine polyphosphate, a silica-containing reinforcing agent and a heat-resistant additive. When the ranges are satisfied, thermal stability may be provided during processing at high temperature.

The heat-resistant additive may be included in an amount of, for example, 0.001 to 3 % by weight, preferably 0.05 to 2 % by weight, more preferably 0.01 to 2 % by weight, even more preferably 0.1 to 2 % by weight, based on 100 % by weight of a total of polybutylene terephthalate, an aluminum salt of diethyl phosphinic acid, melamine polyphosphate, a silica-containing reinforcing agent, melamine cyanurate and a heat-resistant additive.

The heat-resistant additive may be included in an amount of, for example, 0.001 to 3 % by weight, preferably 0.05 to 2 % by weight, more preferably 0.01 to 2 % by weight, even more preferably 0.1 to 2 % by weight, based on 100 % by weight of a total of polybutylene terephthalate, an aluminum salt of diethyl phosphinic acid, melamine polyphosphate, a silica-containing reinforcing agent, melamine cyanurate, polyethylene and a heat-resistant additive.

**<Polybutylene terephthalate resin composition>**

The polybutylene terephthalate resin composition according to the present invention may include polybutylene terephthalate, an aluminum salt of diethyl phosphinic acid, melamine polyphosphate, and a silica-containing reinforcing agent, and, when the content of the polybutylene terephthalate is c and the content of the silica-containing reinforcing agent is d, may satisfy correlation $0.5d \leq c \leq 2d$, specifically correlation $d \leq c \leq 2d$, preferably correlation $1.3d \leq c \leq 1.8d$. When these ranges are satisfied, rigidity and excellent physical property balance between mechanical property and flame retardancy may be provided.

In this description, unless otherwise specified, "content" is given in % by weight. Specifically, the content of each of c and d may be % by weight included in 100 % by weight of a total of polybutylene terephthalate, an aluminum salt of diethyl phosphinic acid, melamine polyphosphate, a silica-containing reinforcing agent, a processability improver and a heat-resistant additive.

Here, c may be, for example, an integer of 35 to 58, preferably an integer of 40 to 58, more preferably an integer of 40 to 55, even more preferably an integer of 45 to 50. When these ranges are satisfied, rigidity and excellent physical property balance between mechanical property and flame retardancy may be provided.

In addition, d may be, for example, an integer of 10 to 50, preferably an integer of 15 to 50, more preferably an integer of 20 to 50. When these ranges are satisfied, rigidity and excellent physical property balance between mechanical property and flame retardancy may be provided.

In an embodiment of the present invention, the polybutylene terephthalate resin composition may include 15 to 65 % by weight of polybutylene terephthalate; 10 to 50 % by weight of a silica-containing reinforcing agent; 5 to 35 % by weight of an aluminum salt of diethyl phosphinic acid; 0.1 to 10 % by weight of melamine polyphosphate; 0 to 10

% by weight of melamine cyanurate; 0.001 to 3 % by weight of a heat-resistant additive; and 0.001 to 3 % by weight of a processability improver.

As another example, the polybutylene terephthalate resin composition may include 35 to 58 % by weight of polybutylene terephthalate; 15 to 50 % by weight of a silica-containing reinforcing agent; 10 to 25 % by weight of an aluminum salt of diethyl phosphinic acid; 0.1 to 5 % by weight of melamine polyphosphate; 0 to 4.5 % by weight of melamine cyanurate; 0.001 to 3 % by weight of a heat-resistant additive; and 0.001 to 3 % by weight of a processability improver.

As another example, the polybutylene terephthalate resin composition may include 40 to 58 % by weight of polybutylene terephthalate; 20 to 50 % by weight of a silica-containing reinforcing agent; 10 to 20 % by weight of an aluminum salt of diethyl phosphinic acid; 1 to 5 % by weight of melamine polyphosphate; 0.1 to 10 % by weight of melamine cyanurate; 0.05 to 2 % by weight of a heat-resistant additive; and 0.05 to 3 % by weight of a processability improver. When these ranges are satisfied, rigidity and excellent physical property balance between mechanical property and flame retardancy may be provided.

The polybutylene terephthalate resin composition may include, for example, one or more additives selected from among a UV stabilizer, a pigment and a colorant in an amount of, for example, 0.01 to 5 parts by weight, preferably 0.5 to 2 parts by weight, more preferably 1 to 2 parts by weight, based on 100 parts by weight of the polybutylene terephthalate resin composition. Within the ranges, the inherent characteristics of the additives may be exhibited without affecting the physical properties of the resin composition.

**<Method of preparing polybutylene terephthalate resin composition>**

The polybutylene terephthalate resin composition according to the present invention may be prepared by a method known in the art. For example, the polybutylene terephthalate resin composition may be prepared in the form of pellets by a method of melt-extruding a mixture of components and additives in an extruder, and the pellets may be used to manufacture injection-molded articles and extrusion-molded articles.

In one embodiment of the present invention, the pellets are extruded at a temperature of 240 to 280 °C. In addition, when injecting the pellets, the temperature of a mold is preferably 80 to 120 °C. When the mold temperature is 80 °C or less, appearance may be deteriorated. When the mold temperature is higher than 120 °C, the pellets may stick to the mold, reducing releasability and increasing cooling rate.

A method of preparing the polybutylene terephthalate resin composition of the present invention may include, for example, a step of kneading and extruding polybutylene terephthalate, an aluminum salt of diethyl phosphinic acid, melamine polyphosphate, and a silica-containing reinforcing agent and the above-described melanin cyanurate as needed.

In the step of kneading and extruding, the screw rotation speed of an extruder may be, for example, 150 to 330 rpm, 150 to 300 rpm, or 200 to 250 rpm. When these ranges are satisfied and as the screw rotation speed is small, rigidity and processability may be improved.

The transport amount per hour (F/R) of the polybutylene terephthalate resin composition fed into the extruder is characterized as being 70 kg/hr or less, preferably 60 kg/hr or less, more preferably 50 kg/hr or less, even more preferably 45 to 55 kg/hr. Within these ranges, rigidity and a physical property balance between processability and specific gravity may be realized.

**<Molded article>**

In accordance with another embodiment of the present invention, a molded article made of the above-described polybutylene terephthalate resin composition is provided.

The molded article may be, for example, an automotive electronic component.

Specifically, the molded article may be an automotive connector.

The molded article may have a tensile strength of 130 MPa or more, or 135 to 165 MPa measured according to ISO 527.

The molded article may have a flow index of 4 to 20 g/10 min, or 4 to 18 g/min measured at 265 °C under a load of 2.16 kg according to ISO 1133.

A 0.8 mm specimen of the molded article may have a flame retardancy (burning time/5 ea) of 50 seconds or less measured according to UL 94.

In describing the polybutylene terephthalate resin composition of the present disclosure, the method of preparing the polybutylene terephthalate resin composition and a molded article made of the polybutylene terephthalate resin composition, it is stated that other conditions or equipment not explicitly described can be appropriately selected within ranges commonly practiced in the art and are not particularly limited.

Hereinafter, examples of the present invention will be described in detail so that those skilled in the art in the

technical field to which the present invention belongs can easily practice the present invention. However, the present invention can be implemented in many different forms and is not limited to examples to be described below.

[Examples]

In an embodiment of the present invention, components used to prepare a polybutylene terephthalate resin composition were as follows:

(A) Polybutylene terephthalate (PBT: intrinsic viscosity 0.5-1 dl/g)
(B) Silica-containing reinforcing agent: Glass fiber having an average diameter of 10 μm and an average length of 3 mm

(B-1) Glass fiber 1: Contains 55 % by weight of silica
(B-2) Glass fiber 2: Contains 48 % by weight of silica

(C) Aluminum salt of diethyl phosphinic acid
(D) Melamine polyphosphate
(E) Melamine cyanurate
(F) Aromatic phosphate: Product name PX200
(G) Heat-resistant additive: Product name B-225
(H) Processability improver: Polyethylene having a drop point of 110 °C, a melting point (mp) of 104 °C, a density (23 °C) of 0.97 g/cm3, and an absolute viscosity (120 °C) of 410 $mm^2/s$
(I) Anti-drop agent: Teflon (Product name JF-4A)

**Examples 1 to 3 and Comparative Examples 1 to 6**

The respective components were mixed according to the contents shown in Table 1 below. The physical properties of the prepared composition were measured in the following manners and are shown in Table 1 below.

* Flow index (g/10 min): Measured according to ISO 1133.

Next, the mixture was supplied at 50 kg/hr, and the screw rotation speed of an extruder was 250 rpm. Here, extrusion was performed at 250 °C using a twin-screw extruder with a screw diameter of 45 mm, and the extruded product was produced in the form of pellets.
The produced pellets were dried at 100 °C for 4 hours or more, and then extruded at 80 °C to manufacture a specimen with a size of 2.5 mm x 50 mm x 90 mm. The physical properties of the manufactured specimen were measured in the following manners and are shown in Table 1 below.

* Tensile strength (Mpa): Measured according to ISO 527.
* Flame retardancy (burning time/5 ea): A 0.8 mm specimen was manufactured and the total burning time (sec) of 5 specimens was measured according to UL94. In the case of the V-0 grade, it was marked as OK and the time required was written together, and when it did not reach the V-0 grade, it was marked as NG.
* When the tensile strength value was a and the flow index value was b, the calculated values of a/b are shown in Table 1 below.

[Table 1]

| Classification | Example1 | Example2 | Example3 | Comparative Exampl e1 | Comparative Exampl e2 | Comparative Exampl e3 | Comparative Exampl e4 | Comparative Exampl e5 | Comparative Exampl e6 |
|---|---|---|---|---|---|---|---|---|---|
| A | 50.1 | 50.1 | 33.1 | 40.9 | 50.1 | 53.1 | 50.1 | 53.1 | 50.1 |
| B-1 | 33 | 33 | 50 | 33 | 33 | 33 | - | 30 | 33 |
| B-2 | - | - | | - | - | - | 33 | - | - |
| C | 13 | 10 | 10 | 13 | 16 | 10 | 10 | 10 | 3 |
| D | 3 | 3 | 3 | - | - | 3 | 3 | 3 | 3 |
| E | - | 3 | 3 | 6 | - | - | 3 | 3 | 10 |
| F | - | - | - | 6 | - | - | 3 | - | - |
| G | 0.4 | 0.4 | 0.4 | 0.4 | 0.4 | 0.4 | 0.4 | 0.4 | 0.4 |
| H | 0.5 | 0.5 | 0.5 | 0.5 | 0.5 | 0.5 | 0.5 | 0.5 | 0.5 |
| I | - | - | - | 0.2 | - | - | - | - | - |
| Tensile strengt h (MPa, a) | 135 | 140 | 160 | 110 | 126 | 148 | 133 | 140 | 147 |
| Flow index (g/10 min, b) | 10 | 18 | 4 | 21.2 | 5.9 | 19.1 | 20.3 | 19.1 | 25 |
| a/b | 13.5 | 7.77 | 40 | 5.2 | 21 | 7.70 | 6.6 | 7.3 | 5.88 |
| Flame retarda ncy V-0 (sec) | OK (34) | OK (13. 9) | OK (14) | OK (19.1) | NG (46.4) | NG:V-2 (Not measur able) | OK (15) | NG:V-2 (Not measur able) | NG:V-2 (Not measur able) |

(The sum of the components shown in the table is 100% by weight.)

As shown in Table 1, it was confirmed that Examples 1 to 3 including all the components according to the present invention had a flow index of 4 to 18 g/10 min and a tensile strength of 135 to 160MPa, required a total time of 13.9 to 34 seconds when burned with flame retardancy V-0, and exhibited a balance between physical properties such as rigidity, processability and flame retardancy. Here, the calculated a/b values were 7.77 to 40, which was confirmed to be within the appropriate range.

On the other hand, it can be seen that, in the case of Comparative Example 1 in which aromatic phosphate and Teflon were used together, tensile strength and flow index are decreased. In this case, it can be seen that the calculated a/b value is also less than 7.76.

Since tensile strength was poor and a flow index could not be measured, the a/b calculation value could not be calculated either.

In addition, it was confirmed that in the case of Comparative Example 2 in which an aluminum salt of diethyl phosphinic acid was added alone and melamine polyphosphate and melamine cyanurate were not added, tensile strength and flow index were decreased.

In addition, it was confirmed that, in the case of Comparative Example 3 in which the content of an aluminum salt of diethyl phosphinic acid in the composition of Example 1 was reduced and polybutylene terephthalate was additionally added as much as the reduced content, tensile strength and flow index were excellent, but flame retardancy could not be measured.

In addition, it can be seen that, in the case of Comparative Example 4 having the same composition as in Example 2 except that a reinforcing agent in which the content of silica is less than an appropriate range, flame retardancy is excellent, but tensile strength and flow index are poor. In this case, it can be seen that the a/b calculation value is also less than 7.76.

In addition, it can be seen that, in the case of Comparative Example 5 having the same composition as in Example 2 except that polybutylene terephthalate was additionally added as much as the reduced reinforcing agent content, flow index is excellent, but tensile strength and flame retardancy are poor. In this case, it can be seen that the a/b calculation value is also less than 7.76.

Further, it can be confirmed that, in the case of Comparative Example 6 having the same composition as in Example 2 except that the content of an aluminum salt of diethyl phosphinic acid and the content of melamine cyanurate were changed, flame retardancy is poor. In this case, it can be seen that the a/b calculation value is also less than 7.76.

In conclusion, when the polybutylene terephthalate resin composition disclosed in the present invention includes polybutylene terephthalate, a silica-containing reinforcing agent, a flame retardant, a heat-resistant component, and the like in a specific composition ratio, the physical property balance between processability, specific gravity, rigidity, and flame retardancy can be realized. Accordingly, the polybutylene terephthalate resin composition of the present invention can be used as a substitute for polyester resin composite materials containing a halogen-based flame retardant, and can be suitably used in the manufacture of automotive parts.

## Claims

**1.** A polybutylene terephthalate resin composition, comprising:

polybutylene terephthalate;
an aluminum salt of diethyl phosphinic acid;
melamine polyphosphate; and
a silica-containing reinforcing agent,
wherein the polybutylene terephthalate resin composition satisfies Equation 1 below:

[Equation 1]

$$7.76 \leq a/b \leq 45$$

where a represents a tensile strength (MPa) of the polybutylene terephthalate resin composition measured according to ISO 527, and b represents a flow index (g/10 min) of the polybutylene terephthalate resin composition measured at 265 °C under a load of 2.16 kg according to ISO 1133.

**2.** The polybutylene terephthalate resin composition according to claim 1, wherein the silica-containing reinforcing agent comprises 50 % by weight or more of silica.

**3.** The polybutylene terephthalate resin composition according to claim 1, wherein, when a content of the polybutylene terephthalate is c and a content of the silica-containing reinforcing agent is d, correlation $0.5d \leq c \leq 2d$ is satisfied.

**4.** The polybutylene terephthalate resin composition according to claim 1, wherein the polybutylene terephthalate is comprised in an amount of 15 to 65 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition comprises a processability improver and a heat-resistant additive, and the polybutylene terephthalate is comprised in an amount of 15 to 65 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

**5.** The polybutylene terephthalate resin composition according to claim 1, wherein the polybutylene terephthalate has an intrinsic viscosity ($\eta$) of 0.5 to 1.25 dl/g measured according to ASTM D2857.

**6.** The polybutylene terephthalate resin composition according to claim 1, wherein the silica-containing reinforcing agent is comprised in an amount of 10 to 50 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition comprises a processability improver and a heat-resistant additive, and the silica-containing reinforcing agent is comprises in an amount of 10 to 50 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

**7.** The polybutylene terephthalate resin composition according to claim 1, wherein the aluminum salt of diethyl phosphinic acid is comprised in an amount of 5 to 35 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition comprises a processability improver and a heat-resistant additive, and the aluminum salt of diethyl phosphinic acid is comprised in an amount of 5 to 35 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

**8.** The polybutylene terephthalate resin composition according to claim 1, wherein the melamine polyphosphate is comprised in an amount of 0.1 to 10 % by weight based on 100 % by weight of a total of polybutylene terephthalate, an aluminum salt of diethyl phosphinic acid, melamine polyphosphate, and a silica-containing reinforcing agent; or the polybutylene terephthalate resin composition comprises a processability improver and a heat-resistant additive, and the melamine polyphosphate is comprised in an amount of 0.1 to 10 % by weight based on 100 % by weight of a total of polybutylene terephthalate, an aluminum salt of diethyl phosphinic acid, melamine polyphosphate, a silica-containing reinforcing agent, a processability improver and a heat-resistant additive.

**9.** The polybutylene terephthalate resin composition according to claim 1, wherein the resin composition comprises melamine cyanurate in an amount of 0.1 to 10 % by weight based on 100 % by weight of a total of polybutylene terephthalate, an aluminum salt of diethyl phosphinic acid, melamine polyphosphate, a silica-containing reinforcing agent and melamine cyanurate; or the polybutylene terephthalate resin composition comprises a processability improver and a heat-resistant additive, and the processability improver and the heat-resistant additive are comprised in an amount of 0.1 to 10 % by weight based on 100 % by weight of a total of polybutylene terephthalate, an aluminum salt of diethyl phosphinic acid, melamine polyphosphate, a silica-containing reinforcing agent, melamine cyanurate, a processability improver and a heat-resistant additive.

**10.** The polybutylene terephthalate resin composition according to claim 1, wherein the resin composition comprises a processability improver in an amount of 0.001 to 3 % by weight based on 100 % by weight of a total of polybutylene terephthalate, an aluminum salt of diethyl phosphinic acid, melamine polyphosphate, a silica-containing reinforcing agent and a processability improver.

**11.** The polybutylene terephthalate resin composition according to claim 1, wherein the resin composition comprises a heat-resistant additive in an amount of 0.001 to 3 % by weight based on 100 % by weight of a total of polybutylene terephthalate, an aluminum salt of diethyl phosphinic acid, melamine polyphosphate, a silica-containing reinforcing agent and a heat-resistant additive.

**12.** A method of preparing a polybutylene terephthalate resin composition, the method comprising: kneading and extruding polybutylene terephthalate; an aluminum salt of diethyl phosphinic acid; melamine polyphosphate; and a silica-containing reinforcing agent,

wherein the polybutylene terephthalate resin composition satisfies Equation 1 below:

[Equation 1]

$$7.76 \leq a/b \leq 45$$

where a represents a tensile strength (MPa) of the polybutylene terephthalate resin composition measured according to ISO 527, and b represents a flow index (g/10 min) of the polybutylene terephthalate resin composition measured at 265 °C under a load of 2.16 kg according to ISO 1133.

**13.** A molded article, comprising the polybutylene terephthalate resin composition according to any one of claims 1 to 11.

**14.** The molded article according to claim 13, wherein the molded article is an automotive electronic component.

**INTERNATIONAL SEARCH REPORT**

International application No.
**PCT/KR2023/009651**

**A. CLASSIFICATION OF SUBJECT MATTER**

**C08K 5/5313**(2006.01)i; **C08K 5/521**(2006.01)i; **C08K 5/3492**(2006.01)i; **C08K 3/36**(2006.01)i; **C08L 67/02**(2006.01)i

According to International Patent Classification (IPC) or to both national classification and IPC

**B. FIELDS SEARCHED**

Minimum documentation searched (classification system followed by classification symbols)

C08K 5/5313(2006.01); C08K 3/34(2006.01); C08K 5/3492(2006.01); C08K 7/14(2006.01); C08K 9/04(2006.01); C08L 51/06(2006.01); C08L 67/02(2006.01); C08L 67/03(2006.01); C08L 77/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌 테레프탈레이트(polybutylene terephthalate), 디에틸포스핀산의 알루미늄염(aluminum salt of diethylphosphinic acid), 멜라민 폴리포스페이트(melamine polyphosphate), 유리섬유(glass fiber)

**C. DOCUMENTS CONSIDERED TO BE RELEVANT**

| Category* | Citation of document, with indication, where appropriate, of the relevant passages | Relevant to claim No. |
|---|---|---|
| Y | CN 112812366 A (ZHEJIANG XINHUA CHEMICAL CO., LTD.) 18 May 2021 (2021-05-18)<br>See paragraph [0112]; claims 1 and 6-9; and table 1. | 1-14 |
| Y | KR 10-2015-0073850 A (EMS-PATENT AG) 01 July 2015 (2015-07-01)<br>See claims 1, 7 and 15. | 1-14 |
| Y | CN 114605789 A (JINSHUI SCIENCE AND TECHNOLOGY STOCK LIMITED COMPANY) 10 June 2022 (2022-06-10)<br>See paragraph [0013]; and claims 1-5 and 7-9. | 5,10,11 |
| A | CN 112724618 A (JINYOUNG (XIAMEN) ADVANCED MATERIALS TECHNOLOGY CO., LTD.) 30 April 2021 (2021-04-30)<br>See paragraph [0002]; and claims 1-9. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2023** | **04 October 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/009651**

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0002370 A (SABIC GLOBAL TECHNOLOGIES B.V.) 06 January 2017 (2017-01-06)<br>See entire document. | 1-14 |
| A | CN 112812366 B (ZHEJIANG XINHUA CHEMICAL CO., LTD.) 09 August 2022 (2022-08-09)<br>See entire document. | 1-14 |

Form PCT/ISA/210 (second sheet) (July 2022)

**INTERNATIONAL SEARCH REPORT**
**Information on patent family members**

International application No.
**PCT/KR2023/009651**

| Patent document cited in search report | Publication date (day/month/year) | Patent family member(s) | Publication date (day/month/year) |
|---|---|---|---|
| CN 112812366 A | 18 May 2021 | CN 112812366 B | 09 August 2022 |
| KR 10-2015-0073850 A | 01 July 2015 | CN 104725837 A | 24 June 2015 |
| | | CN 104725837 B | 26 October 2016 |
| | | EP 2886605 A1 | 24 June 2015 |
| | | EP 2886605 B1 | 21 October 2015 |
| | | EP 2886605 B2 | 01 September 2021 |
| | | JP 2015-120908 A | 02 July 2015 |
| | | JP 5974067 B2 | 23 August 2016 |
| | | TW 201536858 A | 01 October 2015 |
| | | TW I540178 B | 01 July 2016 |
| | | US 2015-0175804 A1 | 25 June 2015 |
| | | US 9815981 B2 | 14 November 2017 |
| CN 114605789 A | 10 June 2022 | WO 2023-160153 A1 | 31 August 2023 |
| CN 112724618 A | 30 April 2021 | CN 112724618 B | 20 September 2022 |
| KR 10-2017-0002370 A | 06 January 2017 | CN 106133056 A | 16 November 2016 |
| | | CN 106133056 B | 02 April 2019 |
| | | EP 3137546 A1 | 08 March 2017 |
| | | EP 3137546 B1 | 04 July 2018 |
| | | US 2017-0121521 A1 | 04 May 2017 |
| | | WO 2015-163996 A1 | 29 October 2015 |
| CN 112812366 B | 09 August 2022 | CN 112812366 A | 18 May 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220117051
- KR 1020230087762
- KR 20110072828 A